# EUROPEAN PATENT APPLICATION

(11) **EP 4 850 976 A1**
(43) Date of publication of application: **09.12.2026**
(21) Application number: 25305811.9
(22) Date of filing: 04.06.2025
(51) Int. Cl.: B60M 1/28

(54) **A METHOD AND A SYSTEM FOR MONITORING AN AUTOMATIC TENSIONING DEVICE FOR A RAILWAY CATENARY LINE**

(71) Applicant: ALSTOM Holdings, 93400 Saint-Ouen-sur-Seine (FR)
(72) Inventor: ELLI, Mauro Antonio, 20095 (MI) CUSANO MILANINO (IT); GASHI, Andi, 20126 MILAN (IT); GIUGLIANO, Dario, 23900 LECCO (IT); CAMMARANO, Emmanuele, 23864 MALGRATE LC (IT); MICHELI, Silvano, 23821 ABBADIA LARIANA LC (IT)
(74) Representative: Plasseraud IP

(57) **Abstract**

The present document relates to a method for monitoring an automatic tensioning device (110) for a railway catenary line, said automatic tensioning device comprising a movable element (112) having visual indicators (114) thereon, a position of said movable element (112) being dependent on ambient temperature, the method comprising:
- acquiring (204) an image of said movable element and said visual indicators via at least one camera (121);
- measuring (206) the ambient temperature via at least one temperature sensor (122);
- analyzing (208) said acquired image to extract a current position of the movable element (112) based on said visual indicators (114);
- determining (210) an expected position of the movable element (112) from reference data stored in a memory (125), using said measured ambient temperature;
- comparing (212) said extracted current position with said determined expected position; and
- determining (214) an operational state of the automatic tensioning device based on said comparison.

## Description

### Technical Field

The present disclosure relates generally to the field of railway infrastructure maintenance and monitoring. More specifically, it pertains to systems and methods for automatically monitoring the operational status of automatic tensioning devices (ATDs) used in railway overhead contact line systems or catenaries.

### Background Art

Railway overhead contact lines, or catenaries, supply electrical power to trains via pantographs. To ensure consistent and reliable current collection, particularly at high speeds, the tension in the contact wire and any associated messenger wires must be maintained within specific limits, despite significant variations in ambient temperature which cause the wires to expand and contract.

Automatic Tensioning Devices (ATDs) are commonly installed along the track, typically at the ends of tensioning sections, to compensate for these thermal variations and maintain a substantially constant wire tension. Various types of ATDs exist, including weight-tensioned systems and spring or pulley-based mechanisms. Another type utilizes a pulley system where the tensioning cable winds or unwinds onto a specifically designed pulley or drum as the catenary length changes.

The correct functioning of the catenary system is dependent on the proper operation of the ATD. For pulley-based ATDs, the rotational position of the pulley must correspond accurately to the ambient temperature and the specific parameters of the tensioning section (e.g., length). An incorrect pulley position (e.g., due to jamming, excessive friction, cable derailment, or other malfunctions) can lead to improper catenary tension. This may result in poor current collection quality, excessive wear on the contact wire and pantograph, and potentially severe damage such as wire breakage or pantograph entanglement, leading to service disruptions and safety hazards.

Consequently, regular monitoring of ATD operational status, particularly the pulley position relative to temperature, is important for railway network operators. Currently, this monitoring is often performed through periodic manual inspections. Maintenance personnel visually check the position of indicators on the ATD pulley, measure or estimate the ambient temperature, and compare the observed position against the reference chart. This manual approach suffers from several significant drawbacks. Inspections are typically infrequent, meaning a fault occurring between inspections may go undetected for a considerable period, potentially leading to failure. Manual checks are labor-intensive, costly, require track access often involving line possessions, and expose personnel to potential hazards associated with working near railway lines and potentially energized equipment. Furthermore, visual assessment can be subjective and prone to human error, especially under adverse weather conditions or poor lighting (e.g., at night). Reading reference charts and correctly interpreting the visual cues can also lead to mistakes.

To address these limitations, some automated monitoring systems for ATDs have been proposed or implemented. Certain systems utilize sensors such as magnetic position encoders or linear variable differential transformers (LVDTs) to measure the position of a movable part of the ATD. While providing automation, these systems often require the installation of specific sensing elements (e.g., magnets, sensor rods) onto the ATD. They can also involve complex installations with separate data acquisition units, evaluation stations, and potentially dedicated communication links (e.g., fiber optics), increasing cost and complexity. Furthermore, these sensor types may not provide direct visual confirmation of the mechanical integrity, such as verifying that the tensioning cable is correctly seated in the pulley groove.

There remains a need for an integrated, autonomous system capable of reliably and continuously monitoring ATDs without the drawbacks of manual inspection or the complexity and limitations of prior automated systems.

### Summary

This disclosure improves the situation.

It is proposed a method for monitoring an automatic tensioning device for a railway catenary line, said automatic tensioning device comprising a movable element having visual indicators thereon, a position of said movable element being dependent on ambient temperature, the method comprising:
- acquiring an image of said movable element and said visual indicators via at least one camera;
- measuring the ambient temperature via at least one temperature sensor;
- analyzing said acquired image to extract a current position of the movable element based on said visual indicators;
- determining an expected position of the movable element from reference data stored in a memory, using said measured ambient temperature;
- comparing said extracted current position with said determined expected position; and
- determining an operational state of the automatic tensioning device based on said comparison.

The term "monitoring" as used herein refers generally to the process of observing, checking, supervising, or keeping track of the status or performance of a device or system over a period of time, often with the aim of detecting changes or deviations from an expected state. In the context of the present invention, monitoring specifically involves repeatedly assessing the operational condition of the automatic tensioning device, particularly the correspondence between its position and the ambient temperature, in an automated manner, contrasting with intermittent manual inspections.

The term "automatic tensioning device" (ATD) refers to a mechanical or electromechanical apparatus integrated into a railway catenary system designed to automatically compensate for the thermal expansion and contraction of the catenary wires (such as contact wires and/or messenger wires) to maintain the tension within predefined operational limits. Examples include, but are not limited to, weight-tensioning systems, spring-loaded devices, and pulley-based systems, which typically include a movable element whose position changes in response to wire length variations.

The term "railway catenary line" encompasses the overhead line system used to supply electric power to railway vehicles equipped with pantographs. This typically includes a contact wire, often supported by a messenger wire (also known as a catenary wire) via droppers, along with associated support structures, insulators, and tensioning equipment (including the ATD).

The term "movable element" refers to a component of the ATD whose physical position or orientation changes as the ATD operates to compensate for catenary wire length variations. This may include, for example, a rotating pulley or drum, a translating weight carriage, a pivoting lever, or any other part whose position is indicative of the state of tension compensation. In a preferred embodiment, the movable element is the main pulley upon which the tensioning means (e.g., cable or strap) acts.

The term "visual indicators" refers to any markings, features, patterns, shapes, colors, codes, or inherent characteristics located on or associated with the movable element that are optically perceivable and whose position or appearance relative to a reference point (which could be the camera's field of view, another part of the ATD, or the tensioning cable itself) changes predictably with the movement of the movable element. These indicators serve as visual cues for determining the movable element's position. Examples include, without limitation, painted colored sectors or bands, applied stickers or labels bearing patterns or codes (like barcodes or QR codes), etched marks, pointers, specific geometric shapes forming part of the element, or even the position of the tensioning cable relative to markings on the movable element. Advantageously, these visual indicators may be pre-existing features provided by the ATD manufacturer for manual inspection.

The term "ambient temperature" refers to the temperature of the surrounding environment in the vicinity of the ATD and the catenary section it serves. This temperature directly influences the thermal expansion and contraction of the catenary wires and is therefore a critical parameter for determining the expected correct position of the ATD's movable element.

The step of "acquiring an image" refers to the action of capturing visual information of the scene, specifically including the movable element and its visual indicators, using an electronic imaging device (the camera) and converting this visual information into a digital format suitable for processing. This may involve capturing a single still image or a frame from a video sequence.

The term "camera" refers to an electro-optical device capable of capturing images. As used herein, it broadly includes digital video cameras, still cameras, CMOS or CCD sensors with appropriate optics, capable of generating a digital representation of the visual scene within its field of view.

The term "temperature sensor" refers to a device capable of measuring the ambient temperature and providing an output signal (analog or digital) representative of that temperature. Examples include thermistors, thermocouples, resistance temperature detectors (RTDs), or integrated circuit temperature sensors.

The step of "analyzing said acquired image" refers to the process of computationally examining the digital image data acquired by the camera to identify and interpret the visual indicators present on the movable element. This analysis aims to extract meaningful information about the current position or orientation of the movable element based on the appearance and location of these indicators within the image. This analysis may employ various image processing techniques and, preferably, utilizes machine learning models, such as convolutional neural networks (CNNs), trained specifically to recognize and locate the relevant visual indicators robustly under various conditions. The output of this step is the "extracted current position", which represents the determined actual position of the movable element at the time the image was acquired.

The term "reference data" refers to information, typically stored electronically in a memory, that defines the relationship between the ambient temperature and the corresponding correct or expected position (or range of positions) of the ATD's movable element for proper operation. This data effectively represents the design characteristics or calibration of the specific ATD installation (e.g., corresponding to a manufacturer's nomogram or setup table). It may be stored as a lookup table, a mathematical function, or another suitable data structure.

The reference data may be organized as a multi-dimensional lookup table. Such a table may correlate ranges of ambient temperature with the expected position of the movable element (e.g., expressed as a set up distance representing an arc length deviation or similar positional metric) for various catenary line section lengths.

The term "section length" refers to the physical length of the specific segment of the railway catenary line whose tension is regulated by the automatic tensioning device being monitored. It typically represents the distance along the track between the ATD itself and the fixed anchoring point at the opposite end of that particular tensioning section.

For a specific installation corresponding to a known line length, the table may effectively provide a mapping between the measured ambient temperature and the target position (or an acceptable range around it) that the movable element should adopt for correct tensioning.

During the step of determining an expected position, the processing unit accesses this stored reference data, identifies the relevant data subset corresponding to the installed line length (which may be pre-configured in the module), and uses the currently measured ambient temperature (or the averaged temperature) to look up or interpolate the corresponding expected position value. This expected position value is then used in the subsequent comparison step. The storage of such detailed reference data allows the system to account for the specific configuration of each monitored ATD, leading to a precise and contextually relevant assessment of its operational state.

The term "memory" refers to a non-transitory computer-readable storage medium capable of storing data and/or program instructions. This typically includes non-volatile memory (such as Flash memory, EEPROM) for storing the reference data and potentially firmware or software.

The step of "determining an operational state" refers to the process of evaluating the condition of the ATD based on the comparison between the extracted current position and the determined expected position. This results in a classification of the ATD's status, such as "Normal," "OK," "Anomaly," "Fault," "Warning," "Out of Tolerance," or similar indicative states, reflecting whether the ATD appears to be functioning correctly according to its design parameters for the measured temperature.

The process may typically initiate at a start time, representing the commencement of a monitoring cycle. This cycle may be triggered periodically based on a timer, or potentially initiated by specific events like a significant change in measured temperature or an external command.

Compared to prior art manual inspections, the present method offers automation, continuity (enabling detection of faults shortly after they occur, not just during periodic checks), objectivity, improved accuracy, and enhanced safety (eliminating the need for personnel track access for routine checks). Additionally, it offers a method to save time for employees by eliminating the need for manual visual inspections. Compared to prior art automated systems relying on non-visual sensors, the present method offers the advantage of potentially lower installation complexity by utilizing existing visual features, and provides an inherent visual basis for the check which might potentially allow for detection of other visible anomalies (e.g., cable issues, gross damage) beyond just position, unlike purely position-based sensors. Furthermore, the analysis may potentially be performed in order to avoid the latency and connectivity dependency issues potentially associated with prior art camera systems relying solely on remote server processing. The determination of the operational state provides a clear, actionable output for maintenance planning, enabling a shift towards condition-based or predictive maintenance rather than purely schedule-based inspections.

Analyzing said image may comprise using a machine learning model.

The term "machine learning model" as used herein refers to a computational algorithm or structure whose performance at a specific task improves through exposure to data, without being explicitly programmed with rules for that task. In the context of analyzing the acquired image, the machine learning model is designed and configured to automatically learn patterns and features directly from image data that are indicative of the visual indicators and their position.

This process typically involves two distinct phases: a training phase and an inference phase. During the training phase, which is usually performed offline prior to deployment, the model (e.g., a neural network) is presented with a dataset of training images. These training images typically show the movable element and its visual indicators under various conditions (different lighting, angles, levels of cleanliness, etc.), and are often accompanied by corresponding known "ground truth" information (e.g., the actual position represented in each image). The model iteratively adjusts its internal parameters (such as weights and biases in a neural network) to minimize the difference between its predictions and the ground truth, effectively learning to recognize the relevant indicators and correlate their appearance with the movable element's position. Once trained, the model is deployed.

During operation of the monitoring method, the system performs the inference phase, where the pretrained machine learning model receives a newly acquired image as input and, based on the patterns it learned during training, outputs the extracted current position of the movable element without further learning or parameter adjustment.

More particularly, during the inference phase, the model may take a newly acquired image as input and may output a list of detected objects, each typically comprising: coordinates defining a bounding box around the object, a class label identifying the object type (e.g., which specific indicator or the cable), and a confidence score indicating the model's certainty in the detection.

Examples of machine learning models suitable for this image analysis task include, but are not limited to, convolutional neural networks (CNNs), support vector machines (SVMs) adapted for image features, or other pattern recognition algorithms capable of learning from visual data.

Said machine learning model may comprise a convolutional neural network.

The term "Convolutional Neural Network (CNN)", as used herein, refers to a specific class of deep artificial neural networks, widely recognized as being particularly effective for processing and analyzing grid-like data structures, most notably digital images. The defining architectural feature of a CNN is the inclusion of one or more convolutional layers. These layers operate by applying a set of learnable filters (also known as kernels) across the input data (e.g., the acquired image or feature maps from a previous layer). Each filter is typically small in spatial dimension but extends through the full depth of the input volume and is designed to detect specific local patterns or features, such as edges, corners, textures, color combinations, or motifs relevant to the visual indicators.

A fundamental principle employed in convolutional layers is parameter sharing, whereby the same filter (and thus the same set of learned weights) is applied at multiple spatial locations across the input. This significantly reduces the total number of parameters compared to fully connected networks and provides a degree of translation invariance, meaning the network can recognize a feature regardless of its precise location in the image. The output of applying filters in a convolutional layer typically results in a set of feature maps, which represent the spatial locations where the specific features targeted by each filter were detected.

CNN architectures often incorporate other types of layers in conjunction with convolutional layers, such as pooling layers (e.g., max pooling or average pooling) which reduce the spatial dimensions of the feature maps, thereby decreasing computational load and providing further robustness to small variations in feature location, and activation function layers (e.g., using ReLU - Rectified Linear Unit) which introduce non-linearity, enabling the network to learn complex relationships. Commonly, the hierarchical features extracted by the convolutional and pooling layers are ultimately passed to one or more fully connected layers at the end of the network, which integrate the learned feature information to perform the final task, such as classification (e.g., identifying which indicator is visible) or regression (e.g., determining a precise angular position).

Due to their ability to automatically learn a hierarchy of relevant visual features directly from image data, CNNs are well-suited for the task of robustly analyzing the acquired image to identify the visual indicators and extract the current position of the movable element in the context of the present invention.

CNN-architectures typically use a CNN backbone (e.g., ResNet, MobileNet, EfficientNet, VGG) as a feature extractor to process the input image and generate rich feature maps. Added on top of this backbone are specific network heads or layers designed to predict object locations and classes.

Two main families of CNN-based object detection architectures exist:

Two-Stage Detectors: These first propose candidate regions in the image where objects might be located (Region Proposal Network, RPN) and then classify and refine the bounding boxes for these regions. Examples include the R-CNN family (e.g., Faster R-CNN, Mask R-CNN). They are often known for high accuracy.

One-Stage Detectors: These directly predict bounding boxes and class probabilities from the feature maps in a single pass. Examples include the YOLO family (You Only Look Once, e.g., YOLOv5, YOLOv8), SSD (Single Shot MultiBox Detector), RetinaNet, and EfficientDet. They are often faster and more computationally efficient, making them well-suited for embedded applications, while recent versions achieve very high accuracy.

Regardless of the specific architecture chosen (e.g., Faster R-CNN, YOLOv8), the CNN-based object detection model may be trained to output bounding boxes around each distinct visual indicator and the tensioning cable, for example. The coordinates and class labels of these detected bounding boxes provide the raw data necessary to compute the extracted current position.

For instance, the relative angular position of specific colored sector bounding boxes, potentially using the detected cable bounding box as a precise reference point, can be calculated to determine the pulley's rotational state. The detection of the cable's bounding box itself may also serve to confirm the mechanical integrity of the cable's engagement with the pulley, as its absence or unexpected location would indicate a potential fault (e.g., derailment). The use of such CNN-based object detection models provides superior robustness compared to traditional image processing techniques or simpler machine learning models, as they can handle variations in appearance, lighting, partial occlusions, and background clutter more effectively, directly addressing the challenges of monitoring equipment in real-world outdoor railway environments.

While the use of machine learning models, particularly CNNs, represents a preferred embodiment for analyzing the acquired image due to its robustness, alternative image analysis techniques based on conventional computer vision algorithms may also be employed, potentially requiring less computational resources or being particularly suited for specific types of well-defined visual indicators. These methods typically rely on explicit feature extraction and rule-based processing rather than learned representations.

In embodiments where the visual indicators comprise distinct colored sectors, markings, or bands on the movable element, the analyzing step may utilize color segmentation techniques. The acquired image may first be converted into a color space less sensitive to illumination changes, such as HSV (Hue, Saturation, Value) or Lab. Predefined color thresholds can then be applied to isolate pixels corresponding to each specific indicator color. Morphological operations (e.g., opening, closing) may be used to refine the segmented regions (blobs). Subsequently, geometric properties of these blobs, such as their centroid coordinates, area, or angular position relative to a reference point (e.g., the detected center of rotation of the pulley, or the detected position of the tensioning cable), can be calculated. The combination of detected colored regions and their relative positions allows for the determination of the extracted current position of the movable element.

Alternatively, if the visual indicators include specific geometric features like pointers, notches, lines, or if the position is determined by the relative location of the tensioning cable on the pulley, the analyzing step may employ contour and shape detection algorithms. Edge detection algorithms (e.g., Canny edge detector) can be applied to identify significant intensity gradients in the image. Techniques such as the Hough Transform can then be used to detect specific shapes like straight lines (representing a pointer or the cable position relative to markings) or circles (to precisely locate the pulley center). Contour matching algorithms can compare detected contours against predefined templates of the visual indicators. The detected position, orientation, or relative arrangement of these geometric features provides the basis for calculating the extracted current position of the movable element.

In further embodiments, the visual indicators may comprise optically readable codes, such as linear barcodes, 2D codes (e.g., QR codes or Datamatrix), or even alphanumeric characters representing position markers or graduations. The analyzing step would then involve algorithms specifically designed for locating and decoding these codes within the acquired image. Standard barcode/QR code decoding libraries or Optical Character Recognition (OCR) engines can be utilized. The information decoded from the visible indicator (e.g., a position value encoded in a QR code, a detected numeric graduation) can directly represent the extracted current position or serve as an index to retrieve the position from a lookup table. The mere detection of which specific code is visible within a defined region of interest might also suffice to determine the position range.

Where a specific, consistent visual pattern or symbol (e.g., a unique logo, an arrow marker) serves as a visual indicator, template matching techniques can be applied in the analyzing step. A reference template image of the indicator may be stored in memory. The algorithm searches the acquired image for the location that exhibits the highest correlation (e.g., using normalized cross-correlation) with the stored template. The coordinates of the best match indicate the position of the indicator within the image, which in turn allows for the calculation of the extracted current position of the movable element. This method is effective when the appearance, scale, and orientation of the indicator in the image remain relatively consistent or when algorithms robust to such variations are employed.

It is also contemplated that combinations of the aforementioned conventional techniques, or combinations of conventional techniques with machine learning elements, could be employed in the analyzing step to enhance robustness or efficiency. For instance, color segmentation might be used initially to define a region of interest, within which template matching or shape detection is subsequently performed for finer localization. While potentially less computationally intensive than deep learning models, these conventional methods may exhibit greater sensitivity to variations in lighting conditions, partial occlusions, dirt accumulation on the indicators, or changes in indicator appearance over time, potentially necessitating more controlled imaging conditions (e.g., leveraging the lighting system) or periodic recalibration.

The method may further comprise generating an alert if said determined operational state indicates an anomaly.

The step of "generating an alert" refers to the action of creating and outputting a notification or signal intended to draw attention to a specific condition, particularly when an anomaly is detected. This generation process can involve various forms of output, including, but not limited to: activating a local visual indicator (such as illuminating or flashing an LED light on the module housing, potentially using different colors or patterns to signify severity); activating an audible alarm; storing an alert flag or log entry in a memory; transmitting a specific alert message via a local wireless interface (e.g., Wi-Fi, Bluetooth) to a connected user device; or transmitting an alert message via a long-range communication interface (e.g., cellular, loT modem) to a remote monitoring center or designated personnel. The purpose of generating the alert is to promptly inform relevant parties (maintenance crews, control center operators) of a potential issue requiring attention or investigation.

The term "anomaly" as used herein indicates a deviation from the expected or normal operational state, as determined by the comparison step of the method. An anomaly is typically indicated when the extracted current position of the movable element falls outside a predefined acceptable tolerance range around the determined expected position for the measured ambient temperature and specific installation parameters. An anomaly signifies a potential malfunction, improper adjustment, or condition requiring investigation, such as, but not limited to, mechanical jamming, excessive friction, incorrect calibration, cable derailment, or other issues preventing the ATD from correctly compensating for thermal variations according to its design specifications. The detection of an anomaly triggers the generation of an alert.

The measured ambient temperature for determining the expected position of the movable element may be an average temperature calculated over a predefined time period preceding the determination.

Instantaneous temperature measurements can be prone to rapid fluctuations and noise due to transient environmental effects (such as wind gusts, momentary sensor heating by direct sunlight) or inherent sensor variability. These short-term variations may not accurately represent the effective thermal state of the railway catenary line itself, which possesses considerable thermal inertia and responds more slowly to changes in ambient temperature. The actual length of the catenary wire, and thus the required position of the ATD's movable element, may be more closely correlated with the integrated thermal conditions over a recent period. By employing an average temperature calculated over a predefined duration, the method effectively filters out high-frequency noise and yields a more stable and representative value reflecting the thermal state influencing the catenary wire. Consequently, the expected position determined using this averaged temperature is a more accurate estimate of the position the movable element should occupy based on the actual condition of the wire. This improved accuracy in determining the expected position leads to a more reliable comparison against the extracted current position, thereby significantly reducing the probability of generating false alerts (false positives) triggered by transient temperature spikes or missing actual anomalies (false negatives) due to using an unrepresentative instantaneous temperature. The predefined time period can be advantageously selected based on the known thermal response characteristics of the specific catenary system installation.

Said predefined time period may be between 5 minutes and 60 minutes. Said predefined time period may be programmable.

The present document may also concern a monitoring system for an automatic tensioning device (ATD) for a railway catenary line, said automatic tensioning device comprising a movable element having visual indicators thereon, a position of said movable element being dependent on ambient temperature, the system comprising a detection module comprising:
- a camera positioned to capture images of said movable element and said visual indicators;
- at least one temperature sensor configured to measure an ambient temperature;
- a processing unit operatively connected to said camera and said temperature sensor;
- a memory storing reference data linking an expected position of the movable element to the ambient temperature; and
wherein said processing unit is configured to implement the method according to any of the preceding claims.

The term "processing unit" as used herein refers generally to the electronic computational circuitry within the detection module responsible for executing programmed instructions and processing data to perform the steps of the monitoring method. This unit receives input data from the operatively connected camera and temperature sensor, retrieves reference data from operational data to the operatively connected memory, performs the image analysis (potentially utilizing specialized hardware acceleration for machine learning models), executes the comparison logic, determines the operational state, and may control other peripherals like communication interfaces or local indicators. The processing unit may be implemented using one or more suitable processing devices, including, but not limited to, a microprocessor (MPU), a microcontroller (MCU), a System on a Chip (SoC) which may integrate specialized co-processors like a Graphics Processing Unit (GPU) or a Neural Processing Unit (NPU) for accelerating image analysis, a Field-Programmable Gate Array (FPGA), an Application-Specific Integrated Circuit (ASIC), or combinations thereof. It serves as the central control and computation element of the detection module, orchestrating the entire monitoring process.

The term "operatively connected" as used herein signifies a functional linkage between components that allows signals, data, and/or control information relevant to the operation of the system to be conveyed between them. This connection enables the components to interact and cooperate as required to perform the functions described, such as the processing unit receiving image data from the camera, temperature data from the sensor, and reading/writing data from/to the memory. An operative connection does not necessarily imply a direct physical wire; it may encompass various forms of coupling, including wired connections (e.g., direct traces on a printed circuit board, cables, serial or parallel buses like I2C, SPI, USB, MIPI CSI/DSI) or established wireless communication links (e.g., within the module, although less common for these core components), provided the necessary functional pathway for information exchange required for the system's intended operation is established.

Said movable element may be a pulley able to rotate about an axis.

The reference point may be considered to be the point on the tensioning cable where it engages with the pulley.

Said visual indicators may be selected from the group consisting of colored markings, barcodes, and patterns applied to said pulley.

The system may further comprise an autonomous power source configured to power the detection module.

The term "autonomous power source", as used herein, refers to an electrical power supply system integrated with or dedicated to the detection module, which is capable of providing the necessary operating power to the detection module independently of any external fixed electrical grid connection. This autonomy enables the deployment of the monitoring system in locations along the railway line where access to mains power may be unavailable, impractical, or cost-prohibitive. The autonomous power source typically comprises components for energy harvesting from the local environment and/or onboard energy storage.

Said autonomous power source may comprise at least one solar panel and a rechargeable battery.

In such embodiment, the power source may include at least one solar panel (photovoltaic panel) configured to convert ambient light into electrical energy, and at least one rechargeable battery (such as, but not limited to, Lithium-ion or LiFePO4 types) operatively connected to the solar panel via appropriate power management circuitry (e.g., a charge controller, potentially with Maximum Power Point Tracking - MPPT). The rechargeable battery stores the energy harvested by the solar panel, allowing continuous or periodic operation of the detection module even during periods without sufficient energy harvesting, such as nighttime or heavily overcast conditions. The power management circuitry also typically regulates the voltage supplied to the detection module's components. While configurations relying solely on long-life primary (non-rechargeable) batteries could theoretically provide autonomy for a limited duration, systems incorporating energy harvesting and rechargeable storage are generally preferred for long-term, low-maintenance operation.

The detection module may further comprise a lighting system.

By providing its own controlled illumination source, the system ensures consistent lighting conditions for image capture, regardless of external ambient light variations. This consistency significantly simplifies the image analysis task as it reduces the variability in appearance (e.g., shadows, contrast) caused by changing sunlight or artificial lighting, thereby improving the robustness and accuracy of the position extraction process.

Said lighting system may comprise LED, for example infrared LEDs, configured to illuminate the movable element for image acquisition, for example in low-light conditions.

The utilization of infrared (IR) LEDs within the lighting system provides specific advantages for the monitoring system. Primarily, IR light, particularly in the near-infrared spectrum, is typically invisible to the human eye but readily detectable by standard image sensors (e.g., CMOS or CCD) commonly used in digital cameras, often requiring only the removal or absence of an IR-cut filter for optimal sensitivity. This allows the system to effectively illuminate the movable element and its visual indicators for clear image acquisition even in complete darkness or extremely low ambient light conditions (such as during nighttime or inside tunnels) without creating any visible light pollution or disturbance. Additionally, IR LEDs are known for their energy efficiency and long operational lifespan, making them well-suited for integration into an autonomous, battery-powered detection module designed for long-term deployment with minimal maintenance.

The detection module may further comprises a local wireless communication interface.

Said local wireless communication interface may be a Wi-Fi or Bluetooth interface, configured to communicate with an external user device.

The detection module may further comprise a long-range wireless communication interface, configured to transmit said operational state and/or alerts generated by the processing unit to a remote central management service.

Said long-range wireless communication interface may be a cellular or loT modem,

The detection module further comprises at least one local indicator configured to indicate said operational state and/or an anomaly alert generated by the processing unit.

The term "local indicator" refers to a component integrated into or attached directly to the detection module, designed to provide a status indication that is directly perceivable by personnel physically present at the module's location. This typically involves a visual signal, such as one or more Light Emitting Diodes (LEDs) which may use different colors (e.g., green for OK, red for anomaly, yellow for warning) or flashing patterns, or potentially an audible signal, to signify the operational state or an anomaly alert determined by the processing unit.

The present document also concerns a computer software comprising instructions to implement at least a part of the above-mentioned method when the software is executed by a processing unit.

The term "computer software", as used herein, refers to a instructions, procedures, algorithms, or their associated documentation, designed to be executed by a processor or processing unit to perform specific tasks.

The present document also concerns a computer-readable non-transient recording medium on which a software is registered to implement the above-mentioned method when the software is executed by a processing unit.

The term "computer-readable non-transient recording medium", as used herein, refers to any type of tangible storage device or article of manufacture capable of physically storing computer-executable instructions (the software) in a form that persists over time and can be subsequently read by a processing unit or computer system. "Non-transient" explicitly distinguishes this medium from fleeting, transitory propagating signals per se (such as electrical signals traveling through a wire or carrier waves transmitting data wirelessly). This medium is therefore capable of storing the software instructions such that they are available for retrieval and execution by the processing unit at a later time.

Examples of computer-readable non-transient recording media include, but are not limited to: non-volatile semiconductor memories (such as Read-Only Memory (ROM), Programmable Read-Only Memory (PROM), Erasable Programmable Read-Only Memory (EPROM), Electrically Erasable Programmable Read-Only Memory (EEPROM), Flash memory as found in solid-state drives (SSDs), USB flash drives, memory cards, or embedded microcontrollers); magnetic storage media (such as hard disk drives (HDDs) or magnetic tapes); optical storage media (such as Compact Discs (CD-ROM, CD-R, CD-RW), Digital Versatile Discs (DVD-ROM, DVD+/-R, DVD+/-RW), or Blu-ray Discs); and even volatile memory such as Random Access Memory (RAM) when considered as a physical medium holding instructions temporarily during execution (as distinct from the propagating signals used to load it). This medium tangibly embodies the software instructions for implementing the method when executed by the processing unit.

### Brief Description of Drawings

Other features, details and advantages will be shown in the following detailed description and on the figures, on which:
Figure 1 schematically illustrates a monitoring system to an embodiment of the present document;
Figure 2 schematically illustrates a method for monitoring an automatic tensioning device for a railway catenary line according to an embodiment of the present document.

### Description of Embodiments

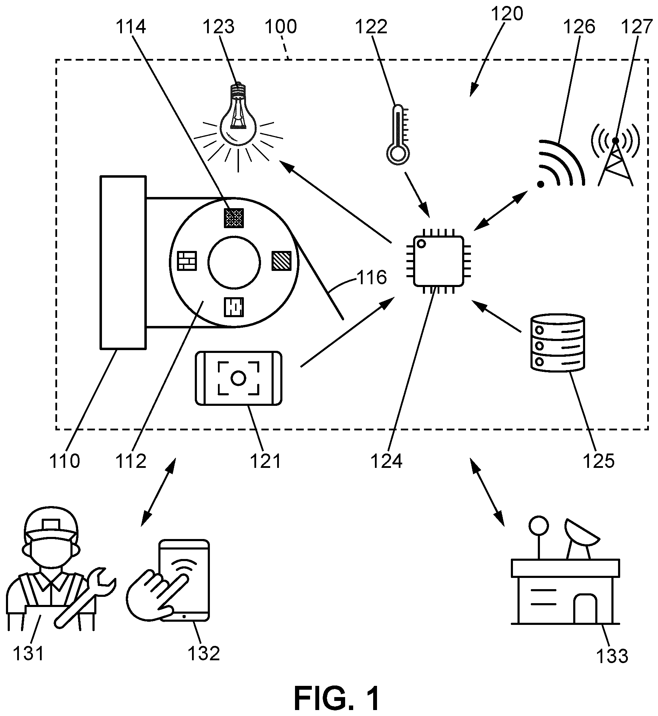

Figure 1 schematically illustrates a monitoring system 100 according to an embodiment of the invention, designed for monitoring an automatic tensioning device (ATD) 110 used in railway catenary lines. The figure depicts the main components of the system and their interactions. The upper portion generally shows a detection module 120 associated with the ATD, while the lower portion illustrates interaction with users and management systems.

The ATD 110 itself is represented, typically comprising a movable element such as a pulley 112, which features visual indicators 114 (e.g., markings, patterns, colored sectors) on its surface. The position of this pulley 112 is the primary parameter monitored to assess the tension state of the associated catenary line segment. The reference point is considered to be the point on the tensioning cable 116 where it engages with the pulley 112.

The detection module 120 comprises several key components configured for this monitoring task. A camera 121 is positioned to capture images of the pulley 112 and its visual indicators 114. These acquired images serve as the input for analyzing the pulley's current positional state. A temperature sensor 122 measures the ambient temperature in the vicinity of the ATD. This measurement is important as the expected correct position of the pulley is dependent on temperature due to thermal expansion/contraction of the catenary wires. An optional but preferred lighting system 123 (e.g., comprising LEDs, potentially infrared) may be included to provide controlled and consistent illumination during image capture, enhancing the reliability and accuracy of the visual analysis, especially under varying ambient light or low-light conditions.

At the core of the detection module 120 is a processing unit 124. This unit receives input data from the camera 121 and the temperature sensor 122. It is configured to execute image analysis algorithms (preferably machine learning based) to process the captured images and extract the current position of the pulley 112 based on the detected visual indicators 114. The processing unit 124 also accesses reference data stored in an associated memory 125. This memory 125 stores the pre-defined relationship linking various ambient temperatures to the corresponding expected positions of the pulley for that specific ATD installation. The processing unit 124 compares the extracted current position with the determined expected position (based on the measured temperature and reference data) to assess the operational state of the ATD (e.g., Normal or Anomaly).

The detection module 120 further includes communication interfaces to disseminate the determined operational state and potential alerts. These may include a local interface 126 (e.g., Wi-Fi, Bluetooth) allowing maintenance personnel 131 equipped with user devices (e.g., smartphones, tablets) 132 to connect locally for detailed monitoring, diagnostics, or control. A long-range communication interface 127 (e.g., cellular modem, LoRaWAN, NB-loT) may also be included to transmit status data and alerts over a wider network to a remote management center 133.

As shown in the lower part, the maintenance personnel 131 can receive alerts and status information via their devices 132, enabling prompt intervention should an anomaly be detected. The remote management center 133 receives data from potentially multiple monitored ATDs, allowing for centralized supervision, proactive maintenance scheduling, trend analysis, and overall fleet management.

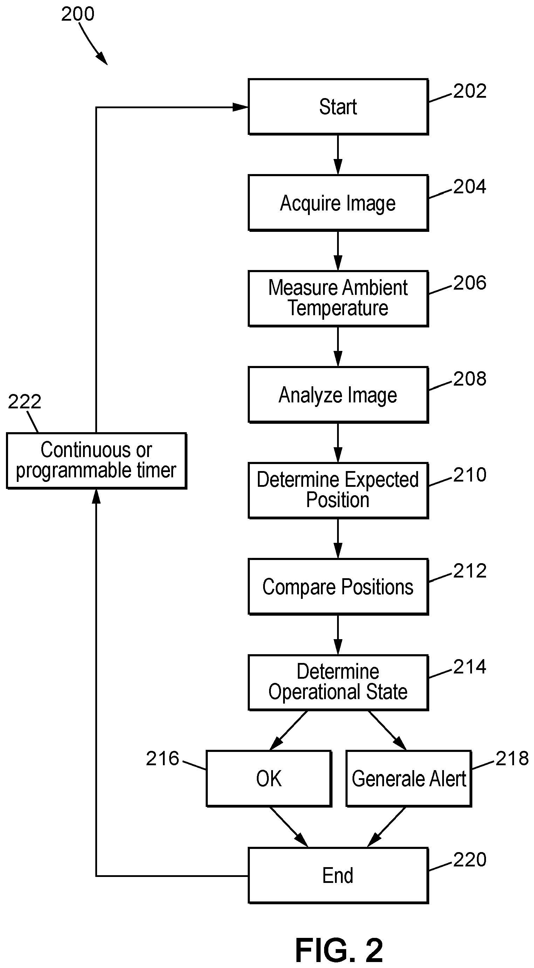

Figure 2 is a flowchart schematically illustrating the sequence of steps involved in the method 200 for monitoring an automatic tensioning device (ATD), according to an embodiment of the invention. The method outlines the process performed by the detection module to automatically assess the operational state of the ATD.

The process typically initiates at a start block 202, representing the commencement of a monitoring cycle. This cycle may be triggered periodically based on a timer, or potentially initiated by specific events like a significant change in measured temperature or an external command.

[Following initiation, the method proceeds to step 204, "Acquire Image". In this step, the at least one camera operatively connected to the processing unit captures a digital image encompassing the ATD's movable element and its associated visual indicators.

Concurrently or sequentially, at step 206, "Measure Ambient Temperature", the at least one temperature sensor measures the current ambient temperature in the vicinity of the ATD. As previously noted, this measured temperature may be an instantaneous reading or, preferably, an average value calculated over a preceding predefined time period to provide a more stable representation of the thermal conditions affecting the catenary line.

The acquired image data is then processed at step 208, "Analyze Image". This step involves computationally examining the image data, preferably utilizing a pretrained machine learning model (e.g., a CNN-based object detector as described previously), to identify the visual indicators and potentially the tensioning cable. The outcome of this analysis is the extracted current position of the movable element, derived from the detected location and configuration of these visual features within the image.

In parallel or subsequently, at step 210, "Determine Expected Position", the processing unit retrieves the reference data stored in the memory. Using the ambient temperature measured in step 206 and knowledge of the specific ATD installation parameters (e.g., section length), the processing unit consults this reference data (e.g., lookup table or function) to determine the theoretically correct or expected position that the movable element should occupy under the current thermal conditions.

The method then proceeds to step 212, "Compare Positions". Here, the extracted current position obtained from the image analysis (step 208) is compared against the determined expected position derived from the reference data and temperature (step 210). This comparison typically involves calculating the difference or deviation between the two positions.

Based on the outcome of the comparison, a decision is made at step 214, "Determine Operational State". This step evaluates whether the deviation calculated in step 212 falls within a predefined acceptable tolerance range.

If the deviation is within the acceptable tolerance range (e.g., following the "Yes" path from 214), the operational state is determined to be normal or "OK" at step 216. The system may log this status.

If the deviation exceeds the acceptable tolerance range (e.g., following the "No" path from 214), the operational state is determined to indicate an anomaly. This signifies a potential issue with the ATD's function or position.

Following the determination of an anomaly, the method may optionally proceed to step 218, "Generate Alert". In this step, an alert signal is generated, which can be manifested through local indicators (e.g., LEDs) and/or transmitted via communication interfaces to remote users or systems.

After the operational state is determined (and any alert generated), the monitoring cycle may conclude at an end block 220, possibly involving the system entering a low-power state until the next scheduled cycle, which may have a programmable timer 222 or it may loop back to step 202 to initiate the next continuous monitoring iteration.

## Claims

1. A method for monitoring an automatic tensioning device (110) for a railway catenary line, said automatic tensioning device comprising a movable element (112) having visual indicators (114) thereon, a position of said movable element (112) being dependent on ambient temperature, the method comprising:
- acquiring (204) an image of said movable element and said visual indicators via at least one camera (121);
- measuring (206) the ambient temperature via at least one temperature sensor (122);
- analyzing (208) said acquired image to extract a current position of the movable element (112) based on said visual indicators (114);
- determining (210) an expected position of the movable element (112) from reference data stored in a memory (125), using said measured ambient temperature;
- comparing (212) said extracted current position with said determined expected position; and
- determining (214) an operational state of the automatic tensioning device based on said comparison.

2. The method according to the preceding claim, wherein analyzing (208) said image comprises using a machine learning model.

3. The method according to the preceding claim, wherein said machine learning model comprises a convolutional neural network.

4. The method according to any of the preceding claims, further comprising generating (218) an alert if said determined operational state indicates an anomaly.

5. The method according to any of the preceding claims, wherein the measured ambient temperature for determining the expected position of the movable element (112) is an average temperature calculated over a predefined time period preceding the determination.

6. A monitoring system for an automatic tensioning device (110) for a railway catenary line, said automatic tensioning device comprising a movable element (112) having visual indicators (114) thereon, a position of said movable element (112) being dependent on ambient temperature, the system comprising a detection module (120) comprising:
- a camera (121) positioned to capture images of said movable element (112) and said visual indicators (114);
- at least one temperature sensor (122) configured to measure an ambient temperature;
- a processing unit (124) operatively connected to said camera (121) and said temperature sensor (122);
- a memory (125) storing reference data linking an expected position of the movable element (112) to the ambient temperature; and
wherein said processing unit (124) is configured to implement the method according to any of the preceding claims.

7. The system according to the preceding claim, wherein said movable element (112) is a pulley (112) able to rotate about an axis.

8. The system according to any of the claims 6 or 7, wherein said visual indicators (114) are selected from the group consisting of colored markings, barcodes, and patterns applied to said pulley.

9. The system according to any of the claims 6 to 8, further comprising an autonomous power source configured to power the detection module.

10. The system according to any of the claims 6 to 9, wherein the detection module (120) further comprises a lighting system (123).

11. The system according to any of the claims 6 to 10, wherein the detection module (120) further comprises a local wireless communication interface (126).

12. The system according to any of the claims 6 to 11, wherein the detection module (120) further comprises a long-range wireless communication interface (127), configured to transmit said operational state and/or alerts generated by the processing unit (124) to a remote central management service (133).

13. The system according to any of the claims 6 to 12, wherein the detection module (120) further comprises at least one local indicator configured to indicate said operational state and/or an anomaly alert generated by the processing unit (124).

14. Computer software comprising instructions to implement at least a part of a method according to one of claims 1 to 5 when the software is executed by a processing unit.

15. Computer-readable non-transient recording medium on which a software is registered to implement a method according to one of claims 1 to 5 when the software is executed by a processing unit.
